# EUROPEAN PATENT SPECIFICATION

(11) **EP 2 005 538 B1**
(45) Date of publication and mention of the grant of the patent: **25.02.2015**
(21) Application number: 07722689.2
(22) Date of filing: 19.03.2007
(51) Int. Cl.: G02B 6/02, H01S 3/0941, H01S 3/04, G02B 6/036, H01S 3/067

(54) **AN OPTICAL FIBER, A FIBER LASER, A FIBER AMPLIFIER AND ARTICLES COMPRISING SUCH ELEMENTS**
OPTISCHE FASER, FASERLASER, FASERVERSTÄRKER UND SOLCHE ELEMENTE UMFASSENDE ARTIKEL
FIBRE OPTIQUE, LASER À FIBRE, AMPLIFICATEUR À FIBRE ET ARTICLES COMPRENANT CES ÉLÉMENTS

(30) Priority: 17.03.2006 DK 200600390
(43) Date of publication of application: 24.12.2008
(73) Proprietor: NKT Photonics A/S, 3460 Birkerød (DK)
(72) Inventor: BROENG, Jes, DK-3460 Birkerød (DK); PETERSSON, Anders, S-22647 Lund (SE); HANSEN, Kim Per, DK-2800 Lyngby (DK); SKOVGAARD, Peter M. W., DK-3460 Birkerød (DK); MAACK, Martin Dybendal, DK-2800 Kgs. Lyngby (DK); NIKOLAJSEN, Thomas, DK-3550 Slangerup (DK)
(74) Representative: Hulgaard, Karin
(86) International application number: PCT/DK2007/050034
(87) International publication number: WO 2007/107164

(56) References cited:
- EP-A- 1 648 055
- EP-A1- 0 910 141
- EP-A2- 0 320 990
- EP-A2- 0 905 834
- US-A- 5 920 582
- US-A1- 2003 063 629
- TÜNNERMANN A ET AL: "The renaissance and bright future of fibre lasers" JOURNAL OF PHYSICS B, ATOMIC MOLECULAR AND OPTICAL PHYSICS, INSTITUTE OF PHYSICS PUBLISHING, BRISTOL, GB, vol. 38, no. 9, 14 May 2005 (2005-05-14), pages S681-S693, XP020088735 ISSN: 0953-4075 cited in the application
- MASUDA H ET AL: "Ultra-wideband hybrid amplifier comprising distributed Raman amplifier and erbium-doped fibre amplifier" ELECTRONICS LETTERS, IEE STEVENAGE, GB, vol. 34, no. 13, 25 June 1998 (1998-06-25), pages 1342-1344, XP006009974 ISSN: 0013-5194

## Description

### FIELD OF THE INVENTION

The present invention relates to optical fibers, fiber lasers, fiber amplifiers, and articles comprising such elements.

### BACKGROUND ART

Optical fibers are today used in numerous applications that span very diverse fields of optics. These fields include telecommunications, medicine, sensors, lasers, and many others. Fiber gratings are used for many different applications - and it is well known that for example germanium doped silica exhibits photosensitivity such that refractive index changes can be written into a fiber core and/or cladding by for example exposure to UV light, reference is directed to US5,478,371 and US6,104,852, and references therein.

For lasers and amplifiers, optical fibers incorporating rare-earth ions are often used (generally referred to as active fibers). Today, fiber lasers are maturing and a range of companies are making them accessible to the market place. For example, IPG Photonics provides fiber lasers with performance that challenges conventional CO2 and solid-state rod- and disk- lasers as the standard for industrial applications. The reasons for the successful entry of fiber lasers in industry are many; higher efficiency, more compactness, lower weight, low service requirements and low running cost. Further, for high power levels, fiber lasers offer superior beam quality that improves precision and enables longer working distances. Therefore, fiber lasers are now employed for a range of applications including cutting, welding, drilling, printing, marking, micro-processing, imaging, targeting, ranging, blinding, air-optical communication links, and medical applications.

For high power fiber lasers and amplifiers, there is a general interest in active fibers with large mode areas (LMA), typically core diameters of around 10 µm and larger. This includes CW and pulsed laser and amplifier systems, reference are directed to US 6,104,852 and Tünnermann et al., "The renaissance and bright future of fiber lasers", J. Phys. B: At. Mol. Opt. Phys. 38, S681-S693, 2005. A typical signal wavelength for high power amplifiers and lasers are around 1.0 to 1.1 µm, where Yb ions are used as active dopants within the core of the fibers. Yb ions are typically preferred due to high pump to signal power conversion efficiency. Other rare earth ions, such as Nd, Er, and Tm are also widely used for fiber lasers and amplifiers.

The core of an optical fiber is defined as the region that provides confinement of signal light.

In order to scale up the power of fiber lasers suppression of intra cavity nonlinear effects is important. One approach to increase the nonlinear threshold within the cavity is to scale up the cross sectional area of the guiding core of the fiber. In order to make laser cavities in fibers with large core dimensions it is essential to be able to write Bragg gratings in Large Mode Area fiber (LMA).

In order to make LMA fibers with high beam quality, preferably single mode LMA fibers, it is necessary to reduce the refractive index contrast between the core and the cladding. In doing so the effective index of the fundamental mode of the core approaches the effective indices of the surrounding cladding modes increasing the chance of coupling between such modes.

Such coupling can be divided into two groups:
- Coupling to uneven cladding modes: This coupling occurs if the refractive index in a cross sectional area of the fiber is inhomogeneous distributed (blazing effects).
- Coupling to even modes. Such coupling occurs especially in chirped grating due to non perfect phase match between the light and the grating.

For prior art optical fibers, it is difficult to realize large mode field diameters (of more than around 10 times a signal wavelength) and obtain good grating quality. In particular, it is difficult to realize large mode area fibers comprising gratings that operate single mode.

Pump light is needed to provide energy for double-clad fiber. Pump light are typically provided from diode lasers, such as provided for example by Laserline, Germany on commercial basis. The pump light is typically delivered in multi-mode fibers.

Fiber-based pump multiplexers or pump-signal multiplexers are typically used to couple pump light and optionally signal feed light to double clad fibers. Such multiplexers are also referred to as combiners or couplers and are offered on commercial terms by several companies, such as ITF, OFS Fitel, Nufern and Crystal Fibre. Typically, several pump fibers are bundled together such as described in US-5,864,644 or WO05091029 that are incorporated herein by reference.

US5920582 discloses an active optical fiber for use in an amplifier or laser and having an inner cladding and an outer cladding. An index grating is written into the inner cladding to provide coupling between cladding modes of pumping radiation conducted in the inner cladding. The periodicity of the index grating is selected to couple energy from cladding modes having minimal overlap with the core to cladding modes having relatively high oerlap. The efficiency of pumping the radiation amplifying medium of the core is thereby improved. The fiber has utility in transmitters for broad band networks.

### DISCLOSURE OF INVENTION

The object of the inventions to provide new optical fibers which are improved compared to the prior art optical fibers, preferably improved with respect to one or more of the drawbacks described above.

The present invention provides new and highly beneficial solutions which are defined in the claims.

The present invention comprises a number of preferred embodiments that are described in the following by way off example, by the accompanying text, figures and claims.

According to embodiments of the invention it has been found that beneficial fibre designs may be obtained by providing the optical fiber with a core having a diameter larger than 10 µm, and wherein the core comprises at least two solid segments of different composition, at least one of the segments comprises a photo-sensitive material and a second core segment comprises at least one active material, such as rare earth doped silica, wherein at least one solid core section comprising a photo-sensitive material is placed in the center of said core. The fiber may preferably be designed such that a Bragg grating can be written in at least one of said solid core segments, preferably a uniform Bragg grating can be written in said core.

In a preferred embodiment, an optical fiber is provided that has a large mode area and an optimized design to allow writing of gratings into the core, whereby when in use as a fiber laser, the optical fiber comprising a grating which provides a high beam quality, such as a beam quality of 5 or less, such as 3 or less, such as 2 or less, such as 1.5 or less, such as around 1.0.

Compared to prior art LMA fibers, optical fibers according to preferred embodiments of the present invention offer increased resistance toward blazing effects. In order for blazed effects to be of importance it is necessary to introduce a phase shift between the top and bottom part of the cross section of the fiber. As realized by the present inventors, the ability to imposed refractive index change to only a small and preferably a center part of the fiber reduces blazed effect, as only the center part of the mode is influenced making it difficult to introduce the phase shift.

Another aspect of the disclosed invention in relation to power scaling of fiber lasers is the inherent ability of the grating to act as a mode filter. As realized by the present inventors, a grating written in the photosensitive part of a fiber according to preferred embodiments of the present invention has a good overlap with the fundamental mode of the fiber whereas the overlap with higher order uneven modes is very low. This effect can be used to ensure single mode operation of a laser in a multimode fiber eliminating the need for mode discrimination via e.g. bending of the fiber.

In one embodiment the optical fiber comprising a core with an effective refractive index n_{core}, and a cladding surrounding said core, wherein
- in a cross-section perpendicular to said longitudinal direction, said core being segmented, said core comprising a first core segment with an area a₁ and a second core segment with an area a₂;
- said first core segment comprises at least one photo-sensitive material, such as Ge and/or B and/or P doped silica;
- said second core segment surrounds said first core segment.

The segment comprising at least one photo-sensitive material is also referred to as an UV section.

The areas a₁ and a₂ may be selected independently of each other, and may e.g. each be from 1 µm and larger, such as 5 µm or larger, such as 10 µm or larger.

In one embodiment a₁ is smaller than a₂, such as at least 1.5 times smaller than a₂, such as at least 2.0 smaller than a₂, such as at least 3.0 smaller than a₂, such as at least 6.0 smaller than a₂, such as at least 12.0 smaller than a₂, such as at least 18.0 times smaller than a₂.

In one embodiment a₁ is from 1/10 to equal to a₂.

It has thus been found that the larger a₂ is in it self but in particular in comparison to a₁ the more uniform can a grating written in the fiber be.

In one embodiment a₂ is larger than 100 µm², such as larger than 150 µm², such as larger than 200 µm², such as larger than 300 µm², such as larger than 500 µm², such as larger than 1000 µm2, such as larger than 1500 µm², such as larger than 2000 µm², such as larger than 3000 µm2, such as larger than 5000 µm2, or even larger than 10000 µm².

In one embodiment the fiber comprises a core region with a segmented design. The core has a largest cross-sectional dimension, d_{core}, and a segment with photo-sensitive material (that allows for example for refractive index changes to be introduced by UV exposure). This UV segment has a largest cross-sectional dimension, d_{UV}, being smaller than d_{core}, where by an optical fiber is provided that allows fiber gratings to be written with improved reflectivity of the fundamental mode compared to prior art large mode area fibers. It has been found that the fiber design also may allow beneficial improvements with respect to obtaining more uniform fiber gratings. Preferably, the UV segment is placed in the centre of the core, whereby an overlap of the UV segment with the fundamental mode of the optical fiber can be optimized. The area and position of the UV segment may be optimized for a small area and large overlap with the fundamental mode. As it is generally simpler to write uniform gratings in smaller areas, it is desired to optimize the UV segment area and the overlap with the fundamental mode. For fibers that have a core with a refractive index profile that supports multi-mode signal light propagation, it is an advantage that the beam quality of a fiber laser comprising a fiber according to a preferred embodiment of the present invention is improved. This results as the fundamental mode of the fiber has a larger overlap with a grating written into the central part of the core than the overlap between higher order modes and said grating. Hence, grating quality will be higher for the fundamental mode than for higher order modes. The grating quality may, for example, be described by low loss or desired specs such as grating reflectivity and spectral width of reflection.

In one embodiment a local concentration of photo-sensitive material in the first segment (UV segment) is larger than 3 mol %, such as larger than 5 mol%, such as larger than 10 mol %, or even larger than 15 mol%.

In one embodiment the second core segment(s) comprises at least one active material, such as rare earth doped silica. The second core segment(s) may for example have a local concentration of active dopant in the second segment is larger than 0.01 mol %, such as larger than 0.1mol %, such as larger than 0.5 mol %, such as larger than 1.0 mol %, or even larger than 5 mol %.

Preferably, the optical fiber is a micro-structured fiber (also referred to as a photonic crystal fiber, PCF). As those skilled in the art of optical fibers will recognize, PCFs provide advantages with respect to large mode area fiber lasers and amplifiers that can be used in combination with the here-disclosed preferred embodiments of the present invention. Microstructured optical fibers or PCFs and their method of production are known, as for example described in "Photonic crystal fibres" by Bjarklev et al., Kluwer Academic Press and WO02088802 that is incorporated herein by reference.

Preferably, the core comprises one or more second segments that comprise pure silica and/or rare-earth doped material. For passive devices, it is preferred to use low loss materials, such as pure silica in combination with the here-disclosed preferred embodiments of the present invention. For active devices, such as fiber lasers and amplifiers, it is preferred to incorporate active materials into the same fiber that comprises photo-sensitive material, such that for example splicing of passive fibers comprising and active fibers is avoided. Alternatively, a fiber laser device comprises two separate fibers or a fiber with two separate segments, wherein photo-sensitive material and active material are at least partly separated. This may be advantages, if for example heat is generated in or around a fiber grating to a level where the grating quality could be affected by the heat.

Preferably, the second segments partly or fully surround the UV segment, whereby an overlap of the UV segment with the fundamental mode of the optical fiber can be optimized.

In one embodiment the core has a largest cross sectional dimension of at least 15 µm, such as at least 20 µm, such as at least 25 µm, such as at least 30 µm, such as at least 40 µm, such as at least 60 µm, such as at least 80 µm, such as at least 100 µm, such as at least 120 µm, such as at least 150 µm, such as at least 200 µm, such as at least 300 µm, such as at least 500 µm, such as at least 800 µm or even at least 1000 µm. The higher effect the larger the core is normally required. Therefore a large core may be desirable.

In one embodiment the core is a multimode core comprising a fibre Bragg grating written into said first core segment, said optical fiber may thus be capable of operating in a fundamental mode when used in a fiber laser configuration.

The core segments may in principle have any refractive index, provided that the core is capable of confining light. In one embodiment the first core segment (UV segment) has a higher refractive index than a second core segment.

Conventional methods of writing of gratings, as known to those skilled in the art, for example as described in US 5,478,371 and US 6,104,852 that are incorporated herein by reference may be used for fibers according to the various preferred embodiments of the present invention. Fibers comprising photo-sensitive segments according to preferred embodiments of the present invention may also be used for long-period gratings and devices comprising long-period gratings.

In one embodiment the optical fiber of the invention defines a longitudinal direction, the optical fiber comprising a core with an effective refractive index n_{core}, and a cladding surrounding said core, wherein said core at least in a cross-sectional area a₃ being segmented at least in its longitudinal direction, said core comprising a first core segment with a length L₁ and a second core segment with a length L₂, said first and said second segments being applied in optical connection to each other, said first core segment comprises a first active material, such as rare earth doped silica, and said first and said second core segments being different from each other in cross-sectional dimension and/or in material composition.

By providing a longitudinal segmentation it has been found that it is possibly to make new fiber systems comprising fiber sections with different properties and without splicing fibers. Thereby the production of the fiber and fiber systems may be simplified and simultaneously loss doe to splicing can be avoided.

In one embodiment of the fiber of the invention comprising a longitudinal segmentation, the first core segment comprises a first active material, such as rare earth doped silica; and the second core segment comprises at least one material selected from the group consisting of:
- a photo-sensitive material, (such as Ge and/or B and/or P doped silica), and combinations thereof.

By this fiber desired effect may be obtained such an amplifying to an increased effect in one fiber without splicing. Other effects such as suppression of undesired ulinearities, such as gain guidance, stimulated Raman scattering and stimulated Brillouin scattering may be obtained.

In one embodiment of the fiber of the invention comprising a longitudinal segmentation, the second core segment has a different cross-sectional dimension than the cross-sectional dimension of the first core segment, at least adjacent to an interface between said first and said second core segments. In this embodiment the first and the second core segments may be equal or different to each other in material composition. The difference in cross-sectional dimension between the first and the second core segments may preferably be such that the smallest of the cross-sectional dimension is between 0.05 and 0.95 times the largest, such 0.1 and 0.9 time the largest, such as 0.5 and 0.8 times the largest cross-sectional dimension.

In the embodiment of the fiber of the invention comprising a longitudinal segmentation, the first core segment the said second core segment are arranged in optical connection to each other, meaning that light can pass from one of the segments to the other when the fiber is in use. The segments need not be in physical contact.

In one embodiment of the fiber of the invention comprising a longitudinal segmentation the first core segment and the said second core segment are arranged in an end to end configuration, this can be obtained relatively simple when using the stacking and drawing method described below.

In one embodiment of the fiber of the invention comprising a longitudinal segmentation the first core segment and the second core segment are overlapping each other and comprises an overlap section with a gradually transition from the material composition of the first core segment to the material composition of the second core section. By having an overlap section with a gradually transition new desired effect may be obtained.

In one embodiment the said optical fiber is segmented both in its longitudinal direction and in a cross-section.

The active material applied in this invention may be any active component such as active material doped with rare-earth ions, such as Nd, Yb, Er, and/or Tm ions.

The photo-sensitive material may preferably comprise Ge, B and/or P.

In one embodiment the optical fiber comprises a cross-sectional segmentation, wherein said second segment surrounds the first segment, preferably the first segment is placed essentially centrally in the core and have a first diameter, the second segment is preferably placed adjacent to and surround said first segment, and has a thickness perpendicular to it longitudinal direction which is between 0.1 and 10 times, such as 0.5 and 3 times, such as 1 time the diameter of the first segment.

In one embodiment the fiber comprises a tapered section such as described below. According to an embodiment of the invention the fiber being segmented in its longitudinal direction such that said tapered section comprising an active material, but is essentially free of photo-sensitive material. Thereby beneficial effects which previously would have required a splicing can be obtained.

The invention also related to an optical fiber optionally comprising a segmented core structure as described herein and defining a longitudinal direction, the optical fiber comprising a core and at least two consecutive cladding layers surrounding said core, said optical fiber comprises in its longitudinal direction at least one first and at least one second section wherein at least one of the consecutive cladding layer in the first fiber section has a cross-sectional dimension which differs from the corresponding cladding layer in the second fiber section. By this embodiment increased confining may be obtained e.g. in a tapered region.

The fiber may be a double cladding fiber e.g. as described below.

The fiber of the invention may for example be used in a laser or an amplifier

The invention also relates to a cladding pumped optical fiber device comprising
- a length of cladding pumped fiber, said length of cladding pumped fiber comprises at least one essentially uncoated section, and
- a heating device arranged to provide heat to said uncoated fiber section.
preferably the major part or even all of the length of the cladding pumped fiber is essentially uncoated.

A bleaching heat device may e.g. be provided in in the area where said cladding pumped fiber is essentially uncoated in order to partly or fully counter-act photo-darkening in the fiber.

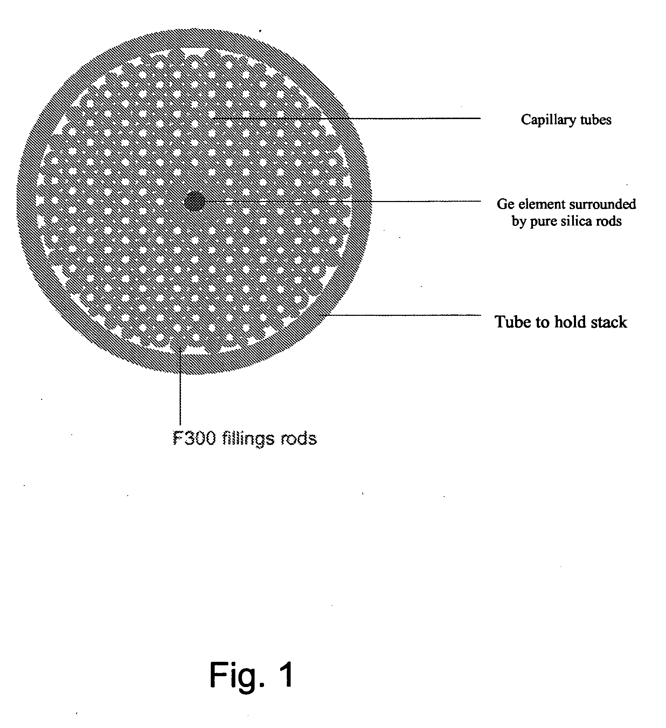

Fig. 1 shows a schematic illustration of a cross-section of a preferred embodiment of a preform for making an optical fiber. The preform comprises a stack of preform elements with at least two different types of elements forming a core. Typically, a preform further comprises capillary tubes and filling rods to stabilize the preform elements inside a tube. The capillary tube may optionally partly or fully be replaced by solid rods. Typically, the capillary tubes are used to define a cladding or parts thereof.

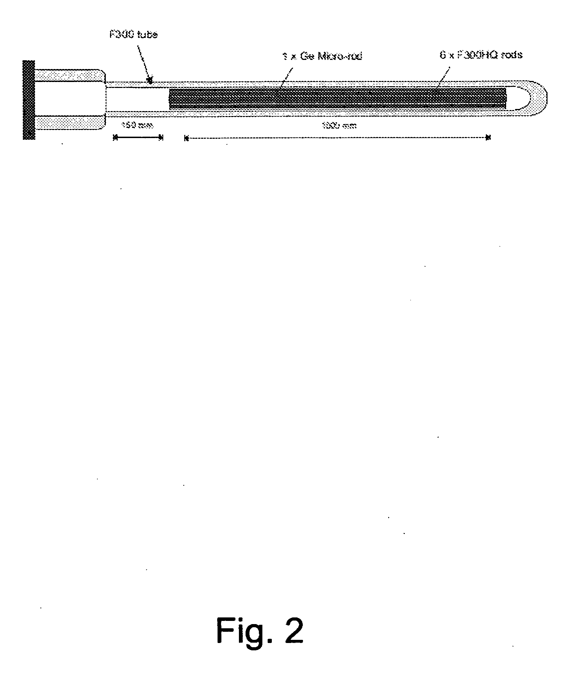

Typically, preform elements extend in a longitudinal direction along the preform, as shown schematically in Fig. 2.

According to a preferred embodiment of the present invention, preform elements are shorter than a total preform length and the preform is segmented in the longitudinal direction. Preferably, preform elements of different types are stacked to lie end to end in longitudinal direction of the preform. Preferably, the lengths and materials of said preform elements are selected to provide increased non-linear threshold in an optical fiber produced from the preform, whereby optical fibers for high power lasers and amplifiers are obtained.

Preferably, at least one core element is doped with rare-earth ions, such as Er ions, Nd ions, Yb ions, Ho ions, and/or Tm ions or combinations thereof, whereby an active optical fiber can be made from the preform.

Preferably, at least one core element comprises photo-sensitive material, such as Ge material, whereby gratings ions can be written in the final optical fiber. Preferably, a central core element comprises photo-sensitive material, whereby an optical fiber with optimized overlap between a fundamental and a fiber grating can be obtained.

Preferably, the photo-sensitive material has an area that is smaller than the core area, such as smaller than one third of the core area, preferably around one seventh or one nine-teenth of the core area, whereby an optical fiber with optimized overlap between a fundamental and a fiber grating can be obtained.

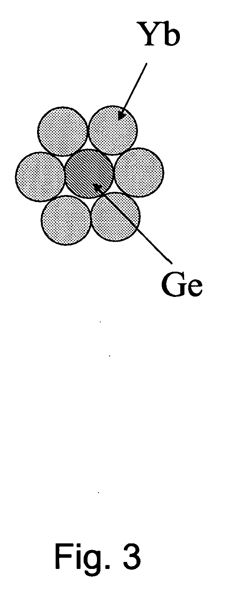

Preferably, the preform comprises both photo-sensitive and rare-earth doped core elements. Fig. 3 shows an example of seven core rods with a central Ge rod surrounded by six Yb rods.

Preferably, a core element is pre-produced, whereby freedom in selection of core segment in an optical fiber can be obtained. Preferably, the pre-production comprises the steps of:
1. Arranging a number of pre-elements (such as for example doped preform) in a bundle, for example by stacking,
2. Placing said number of pre-elements in a holding tube,
3. Drawing or stretching said tube and pre-elements to a given dimension,
4. optionally, collapsing said tube around said pre-elements during drawing or stretching,
5. optionally, collapsing said tube around said pre-elements after drawing or stretching,
6. optionally removing part or all of said holding tube after step 3, 4 or 5.

Step 6 is preferably done using HF-etching or laser-polishing, whereby a very clean production is obtained. For description of laser-polishing method that may be applied see US 2005000154657 that is incorporated herein by reference.

Pre-producing the core elements has the advantage of allowing precise tailoring of the properties of the core segments of the final optical fiber. The pre-production may, for example, be performed as described in WO02088802 or in US 7,116,875 that are incorporated herein by reference, with the difference that pre-elements are selected and arranged such that the core element comprises the features of the core as defined above.

In preferred embodiments, an optical fiber is produced from a preform as described above.

In a preferred embodiment, an optical fiber with a segmented core having a core diameter of 12 µm or larger, such as 15 µm or larger that comprises a photo-sensitive core segment with a diameter of between 5 % and 70 % of the core diameter, such that during UV writing of gratings into the photo-sensitive core segment, single mode performance of the core is ensured.

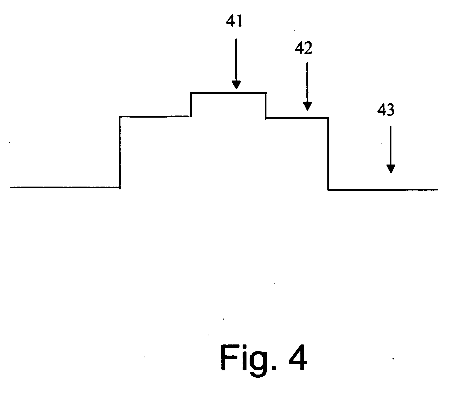

Fig. 4 shows a schematic example of a fiber according to a preferred embodiment of the present invention, where the fiber has a first core segment 41 surrounded by a second core segment 42. The core is surrounded by a cladding 42. In preferred embodiments, the first core segment has a higher refractive index than the second core segment in order to increase overlap between the fundamental mode and the photo-sensitive core segment. This can be used to enhance single mode operation of a laser in a multimode fiber. Thereby eliminating the need for mode discrimination via e.g. bending of the fiber.

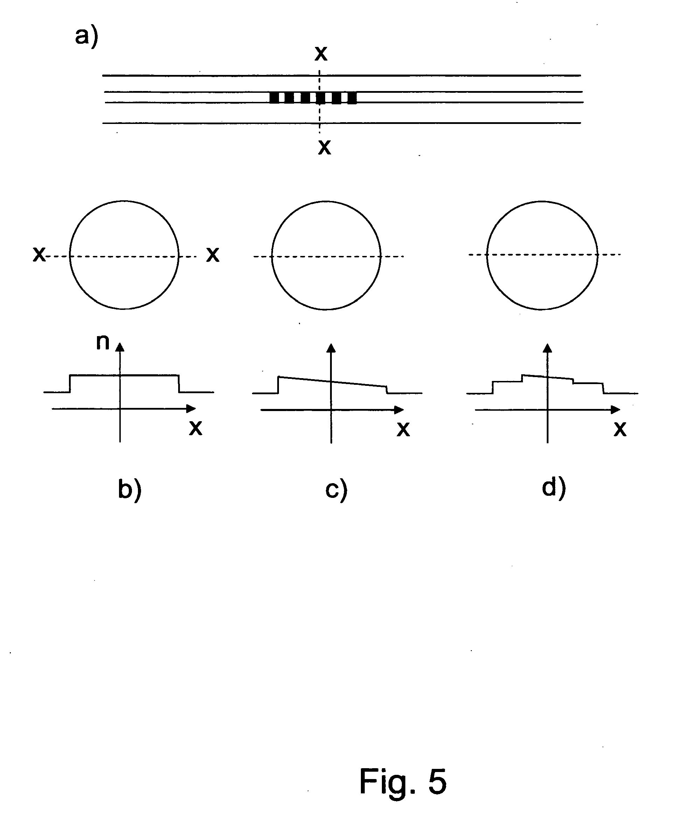

Fig. 5 illustrates schematically the possibility of reducing blazed effects using a fiber according to preferred embodiments of the present invention. Fig. 5a illustrates a fiber Bragg grating imposed on the core of an optical fiber. In Fig. 5b the refractive index distribution of a non-blazed grating is shown. Fig. 5c illustrates the index profile caused by a blazed effect in a prior art LMA fiber. The refractive index tilt causes a phase shift of a guided mode from one side of the core to the other. Fig. 5d shows the refractive index profile obtained with only the center part being photosensitive. The tilt only influences the center part of a guided mode, thus reducing the effect of the blazed grating.

Preferably, an optical fiber with a segmented core comprises at least one photo-sensitive segment surrounded by one or more rare-earth doped segments, whereby a fiber laser can be made in a single fiber, such that critical splices can be avoided.

Preferably, an optical fiber with a segmented core comprises at least a first segment that is placed essentially centrally in the core and have a first diameter, a second segment is preferably placed adjacent to and surround said first segment, and has a thickness perpendicular to its longitudinal direction (i.e. cross-sectional thickness) which is between 0.1 and 10 times, such as 0.5 and 3 times, such as 1 time the diameter of the first segment.

Preferably, an optical fiber with a segmented core is a double-clad (DC) fiber, preferably such as described in WO03019257, but modified to have a segmented core as described herein. WO03019257 is incorporated herein by reference with the additional features as defined in the preferred embodiments.

Preferably, an optical fiber is produced with a segmented core by the steps of stacking elements to provide a preform and drawing the preform, wherein the elements that are stacked are selected such that the core comprises the features of the core as defined above, the method preferably being performed as disclosed in WO02088802 or in US 7,116,875 that are incorporated herein by reference with the difference that the elements stacked is selected such that the core comprises the features of the core as defined above.

The present invention further includes use of an optical fiber according to a preferred embodiment in laser and amplifier configuration. Preferably, optical fibers according to preferred embodiments are used in master-oscillator, power amplifier (MOPA) configurations as described in US5,473,622 that is incorporated herein by reference.

The MO and PA sections may be two different DC fibers that are spliced together.

For MO and PA sections in different DC fibers (i.e. at least a first and a second DC fiber and optionally more DC fibers), it is preferred that pump light is not lost at splice between the different DC fibers. To achieve this, the present inventors have realized a preferred embodiment of a MOPA device comprising a first DC fiber that receives a highest pump power and second DC fiber that receives a lower pump power, wherein said first DC fiber has a pump core that has a similar or smaller diameter than a pump core of said second DC fiber. Preferably, a difference in pump core diameters is larger than 1 µm, such as between 1 µm and 10 µm larger. Preferably, said first DC fiber has an NA that is similar or smaller than said second DC fiber.

In preferred embodiments, a MOPA device comprises an air-clad fiber as DC fiber. As those skilled in the art of optical fibers will recognize, air-clad fibers provide advantages with respect to high numerical apertures for pump light in fiber lasers and amplifiers that can be used in combination with the here-disclosed preferred embodiments of the present invention.

Preferably, a laser device is provided that uses a MOPA configuration with an air-clad fiber that comprises at least one sealed end or one collapsed section. See EP 01153324 or WO03032039 (that are incorporated herein by reference) for details on collapsing and sealing fibers with air holes.

### Example 1.6 kW MOPA type fiber laser:

Starting out with a look at the power level of commercially available pump laser, 6 kW diode lasers with up to four diode laser stacks are now available from Laserline, Germany. These systems can be provided with fiber-coupled output with diameter of 1500 µm fiber and NA = 0.22. The wavelength is at present 940 nm for the highest power systems.

For practical packaging of fiber lasers where bending diameters of up to around 1 meter can be tolerated, it is possible to operated with strict single-mode PCFs having mode field diameter (MFD) of around 40 µm. A calculation of the power limitations for a fiber with this core size can be done assuming a damage threshold of 5 W/µm2 (a typical number used in literature deduced from experimental data).

The thermo-optical threshold is deduced from air-cooled demonstration of at least 100 W/m and assuming a factor of 100 improvement for water-cooled systems. The laser line-width is assumed large enough to eliminate Stimulated Brillouin Scattering (SBS) and the dominant nonlinear effect to be Stimulated Raman Scattering (SRS). From such considerations, it is found that for fiber lengths between around 1 and 20 m, the fiber laser can reach a power level of 6 kW and that damage threshold of silica sets the limit.

The table below outlines specifications of an exemplary 6 kW fiber laser comprising a MOPA configuration according to a preferred embodiment of the present invention. The example assumes 940 nm pumping and 50% slope efficiency of the optical fiber or rod-type fiber.

| **Parameter** | **Specification** |
|---|---|
| MFD | 40 µm |
| Pump cladding dimension | 500 µm |
| Pump cladding NA | 0.70 |
| Cooling | Water cooled |
| Fiber length | 20 m (shorter length is possible using |
| | 920 nm or 975 nm pumping) |
| Laser configuration | MOPA |
| Seed signal | 20 W |
| Pump coupling scheme | End-pumping or side-pumping |
| Pump power | 12 kW |
| Pump beam parameters | Spotsize = 1500 µm |
| | NA = 0.22 |
| Residual pump power | 0.3 kW |
| Bend diameter | 1 m |

For the exemplary 6 kW fiber laser above, there is a penalty in terms of fiber length due to 940 nm pumping (about a factor of 4 shorter lengths can be achieved for 975 nm pumping). It is reasonable to expected further development of diode lasers and future performance of 975 nm pumps to match present-day performance of 940 nm pumps. For further power scaling, we shall therefore estimate 975 nm pump diode lasers with power level of 6 kW pump and beam quality corresponding to spot-size of 1500 µm and NA of 0.22. Through advanced beam optics engineering, it is further estimated that future brightness conservation such multiple stacks allow for power levels of around 36 kW pump power for a spot-size 7 mm and NA of 0.10.

In a preferred embodiment of the present invention, a MOPA structure or configuration is provided comprising a tapered fiber or rod-type fiber section, whereby large mode field diameters can be obtained. Preferably, a MOPA structure or configuration is provided with a MFD of around 75 µm or larger at its largest dimensions, whereby nonlinear effects are suppressed to increase output power.

It is an advantage of MOPA configuration comprising a tapered fiber that the mode field diameter can be adapted through the MOPA amplification stage as the signal light intensity is increasing. Preferably, the tapering is performed or selected such that the core is increase in size as the signal light intensity is increased (though amplification), such that that nonlinear effects such as stimulated Raman scattering (SRS) or stimulated Brillouin scattering (SBS) is are suppressed.

In a preferred embodiment, a MOPA structure is provided that comprises a DC fiber amplifier, where the DC fiber amplifier comprises a tapered section and pump light is coupled into a large-diameter end of said tapered section, whereby large mode field diameters can be obtained and nonlinear effects such as SRS and SBS are suppressed.

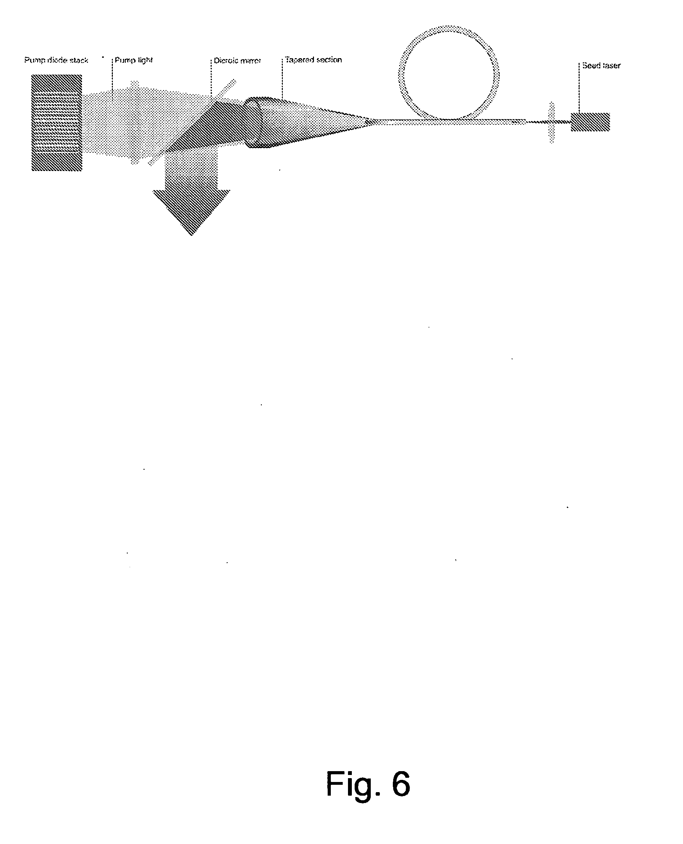

Fig. 6 shows a schematic example of a tapered DC fiber and a MOPA laser according to preferred embodiments of the present invention.

Preferably, a MOPA device comprises an active, air-clad fiber which is tapered over at least a part of its length, whereby large mode field diameters can be obtained and nonlinear effects such as SRS and SBS are suppressed. Preferably, the active, air-clad fiber is a rod-type fibers that is a fiber which is so thick that it cannot be coiled, whereby influence of microbending losses is suppressed and high beam quality is obtained, such as a beam quality of 5 or less, such as 3 or less, such as 2 or less, such as 1.5 or less, or around 1.0. Preferably, the air-clad fiber is tapered in such a manner that it is comprises section that are flexible (meaning that is can be coiled) and section that is stiff (meaning rod-type), whereby a part of the air-clad fiber can be coiled to reduce foot-print of a device comprising said air-clad fiber.

Alternatively, the seed source in Fig. 6 can be replaced by a MO created directly in the shown fiber, for example by incorporating a pair of gratings in the fiber.

In a preferred embodiment, a MOPA structure or configuration comprises a tapered air-clad fiber with at least one pair of gratings forming a laser cavity, whereby a single fiber can be used for the MOPA, such that splices can be eliminated. It is an advantage to avoid splices in order to reduce loss in the MOPA.

Preferably, said gratings are positioned in a thin end of the air-clad fiber. It is generally more difficult to write gratings in thick fibers as compared thin fibers, hence it is an advantage to position said gratings in a thin end to facilitate writing of gratings. Preferably, said laser cavity is pumped by residual pump light from the PA section, whereby separate pump sources for the PA section are not needed. Alternatively, the thereby-formed MO can be pumped by a pump sources coupled in said thin end of the fiber, whereby increased pump powers for the MO section can be provided.

End- or side-pumping can be used separate or in combination with preferred embodiments of the present invention. See for example WO03079077 for side-pumping of air-clad fiber or previously mentioned references for fiber-based couplers that may be used for end-pumping.

Preferably, the DC fiber or rod-type fiber is an air-clad fiber or rod-type fiber, such that NA varies in a manner to substantially preserve brightness along the tapered section, see WO05091029 (that is incorporated herein by reference) for description of air-clad tapers. Thereby, the DC fiber can be pumped over the tapered section essentially without excess loss of pump light.

In a preferred embodiment, the MOPA structure comprising a tapered, air-clad section is used in a laser device, where pump light and signal light are counter-propagating. Thereby, the MOPA can be optimized with respect to various effects, such as thermal load, reduced signal and pump light intensities (signal light is amplified as the fiber tapers up in dimensions, and pump light is absorbed as the fiber tapers down in dimensions), and/or reduced photo-darkening.

Preferably, pump light is coupled into a large-diameter end of the taper. Thereby, high pump powers can be coupled into the fiber due to lower risk of glass damage. Preferably, amplified signal light is coupled out from a large-diameter end of the taper. This is preferred in order to reduce light intensities at the taper end.

It is an advantage that pump light at relatively low NA can be coupled to a large-diameter end of the taper, in order to lower requirements of pump coupling optics (such as for example bulk and/or fiber optics).

It is a further advantage that MFD of signal light can be scaled up in diameter as signal power is increased. Thereby, signal light intensities can be kept below a threshold of nonlinearities, as the signal light is amplified.

It is a further advantage of MOPA structures comprising tapered, air-clad fibers that splices are reduced or eliminated, such that critical 'hot spots' are eliminated. In addition to eliminating all splice points that are thermally weak, MOPA structures with tapered air-clad fibers allow gradually heat-distributed over the fiber length.

The tapered air-clad fibers allow pumping from the low NA large dimension end to the high NA small dimension end. Preferably, a MOPA structure comprises a tapered air-clad fiber with NA values in the range from around 0.05 to 0.30 in a large dimension end and in the range from around 0.40 to around 0.90 in a small dimension end. The lower pump NA range is preferred in order to match to commercially available pump diodes and delivery systems for such diodes. The higher pump NA range is preferred in order to reduce the dimensions of the optical fiber and facilitate single mode operation.

Preferably, a MOPA structure comprises a tapered, air-clad fiber with microstructures within the pump cladding, in order to maintain high beam quality of a signal light during beam expansion through the taper.

Preferably, end-sealing is used in combination with the various preferred embodiments of the present invention for environmental protection and to decrease pump and signal light intensities at the high-power end-facet.

### Example 2. 20 kW MOPA type fiber laser:

As an example, the rod-type part of a tapered, air-clad fiber can be of a length of a few meters (that needs to be kept straight for mechanical reasons). Preferably, power of seeding signal light (from fiber-internal or external MO) is around 1 to hundreds of Watt. Optionally, conventional pump and signal combiners may be utilized at the signal input end.

The table below summarizes main specs of an exemplary preferred embodiment of the present invention:

| **Parameter** | **Specification** |
|---|---|
| Signal MFD at seed end | 40 µm |
| Signal MFD at output end | 280 µm |
| Pump cladding dimension, seed end | 1000 µm |
| Pump NA, seed end (thin end) | 0.70 |
| Pump NA (thick end) | 0.10 |
| Cooling | Water cooled |
| Fiber length | 20 m |
| Laser configuration | MOPA |
| Seed signal | 20W-1 kW |
| Pump coupling scheme | End-pumping or side-pumping |
| Pump power | 40 kW |
| Pump beam parameters | Spotsize = 7 mm |
| | NA = 0.10 |
| Residual pump power | 1 kW |
| Bend diameter | 1 m (over untapered section) |
| Output signal power | 20 kW |

Various beam paths for pump light and signal light can be implemented (using more advanced optical configurations that the one showed in Fig. 6). The acceptance angle of the tapered, air-clad fiber can for example allow for off axis pump coupling to allow free-path propagation of the signal light to eliminate the use of dichroic mirror.

### Example 3. 100 kW MOPA type fiber laser:

For further power scaling, the structural dimensions of the MOPA structure for 20 kW power can be scaled up. This sacrifices bendable sections and the air-clad fiber will take shape of a thick, tapered glass rod. This tapered MOPA structure component can be imagined as a "glass canon" with dimensions of a few millimeters in diameter and length of for example around 5 meters.

The table below summarizes exemplary specs of a MOPA with 60 to 100 kW output power:

| **Parameter** | **Specification** |
|---|---|
| Signal MFD at seed end | 80 µm |
| Signal MFD at output end | ∼1000 µm |
| Pump cladding dimension, seed end | 1000 µm |
| Pump NA, seed end (thin end) | 0.90 |
| Pump NA (thick end) | 0.10 |
| Cooling | He cooled |
| Fiber length | 5m |
| Laser configuration | MOPA |
| Seed signal | 20 W - 1 kW |
| Pump coupling scheme | End-pumping or side-pumping |
| Pump power | 200 kW |
| Pump beam parameters | Spotsize = 9 mm |
| | NA - 0.10 |
| Residual pump power | 5 kW |
| Output signal power | 100 kW |

Preferably, the MOPA structure with tapered, air-clad fiber comprises longitudinal segmentation of the core design, such that optimized designs for specific power levels are used.

Several solutions can be made using PCF technology. Preferably, a longitudinally segmented core elements with gradual or lumped transition(s) from a passive, pure silica section to an active core section is used. This allows pure silica core at the largest fiber dimensions for beam expansion and active section at smaller dimensions (to ensure gain guidance does not limit beam expansion).

Theoretical predictions for gain guiding fiber design have been made by Prof. Siegmann at Standford University for single mode cores up to 400 µm. With respect to end-facet damage, such large MFD dimension would allow 60 kW output power.

The present inventors have realized preferred embodiments of amplifier or laser structures with output signal MFD above 400 µm using longitudinally segmented core designs in tapered, air-clad fibers.

In a preferred embodiment, a MOPA-based laser device is provided that comprises a tapered, air-clad fiber with an output power of 60 kW or more. Preferably, said tapered, air-clad fiber comprises a longitudinally segmented core.

A bleaching heat device may be provided in combination with the above-described preferred embodiments of the present invention. The bleaching heat device is used to partly or fully counter-act photo-darkening in DC fibers.

In a preferred embodiment, an air-clad fiber comprising an uncoated section is used in combination with a bleaching heat device, such as for example a furnace heating a rod-type fiber in a predetermined procedure or cycle.

The invention is defined by the features of the independent claim(s). Preferred embodiments are defined in the dependent claims.

Some preferred embodiments have been shown in the foregoing, but it should be stressed that the invention is not limited to these, but may be embodied in other ways within the subject-matter defined in the following claims. Various modifications and applications may occur to those skilled in the art without departing from the scope of the invention as defined in the appended claims.

## Claims

1. An optical fiber defining a longitudinal direction, the optical fiber comprising a core having a diameter larger than 10 µm, said core comprises at least two solid segments of different composition, **characterized in that** at least one of the segments comprises a photo-sensitive material and a second core segment comprises at least one active material, such as rare earth doped silica, wherein said at least one solid core section comprising a photo-sensitive material is placed in the center of said core.

2. An optical fiber as claimed in claim 1 , the optical fiber.comprising a core with an effective refractive index n_{core}, and a cladding surrounding said core, wherein
• in a cross-section perpendicular to said longitudinal direction, said core being segmented, said core comprising a first core segment with an area a₁ and a second core segment with an area a₂;
• said first core segment comprises at least one photo-sensitive material, such as Ge and/or B and/or P doped silica;
• said second core segment surrounds said first core segment.

3. An optical fiber as claimed in claim 2, wherein a₁ is smaller than a₂, such as at least 1.5 times smaller than a₂, such as at least 2.0 smaller than a₂, such as at least 3.0 smaller than a₂, such as at least 6.0 smaller than a₂, such as at least 12.0 smaller than a₂, such as at least 18.0 times smaller than a₂.

4. An optical fiber as claimed in claim 2 or 3, wherein a₂ is larger than 100 µm², such as larger than 150 µm², such as larger than 200 µm², such as larger than 300 µm², such as larger than 500 µm², such as larger than 1000 µm2, such as larger than 1500 µm², such as larger than 2000 µm², such as larger than 3000 µm2, such as larger than 5000 µm2, or even larger than 10000 µm².

5. An optical fiber as claimed in any one of the preceding claims wherein a local concentration of photo-sensitive material in the first segment is larger than 3 mol %, such as larger than 5 mol%, such as larger than 10 mol%, or even larger than 15 mol%.

6. An optical fibre as claimed in any one of the preceding claims wherein a local concentration of active dopant in the second segment(s) is larger than 0.01 mol%, such as larger than 0.1 mol%, such as larger than 0.5 mol%, such as larger than 1.0 mol%, or even larger than 5 mol%.

7. An optical fiber as claimed in any one of the preceding claims wherein said core has a largest cross sectional dimension of at least 15 µm, such as at least 20 µm, such as at least 25 µm, such as at least 30 µm, such as at least 40 µm, such as at least 60 µm, such as at least 80 µm, such as at least 100 µm, such as at least 120 µm, such as at least 150 µm, such as at least 200 µm, such as at least 300 µm, such as at least 500 µm, such as at least 800 µm or even at least 1000 µm.

8. An optical fiber as claimed in any one of the preceding claims wherein said core is a multimode core comprising a fibre Bragg grating written into said first core segment, said optical fiber preferably being capable of operating in a fundamental mode when used in a fiber laser configuration.

9. An optical fiber as claimed in any one of the preceding claims, wherein said optical fiber being segmented both in its longitudinal direction and in a cross-section.

10. An optical fiber as claimed in any one of the preceding claims and comprising a cross-sectional segmentation, wherein said second segment surrounds the first segment, preferably the first segment is placed essentially centrally in the core and have a first diameter, the second segment is preferably placed adjacent to and surround said first segment, and has a thickness perpendicular to it longitudinal direction which is between 0.1 and 10 times, such as 0.5 and 3 times, such as 1 time the diameter of the first segment.

11. An optical fiber as claimed in any one of the preceding claims, wherein said fiber is a double-clad (DC) fiber.

12. An optical fiber as claimed in any one of the preceding claims, wherein said fiber comprising a tapered section.

13. An article comprising a fiber as claimed in any one of the preceding claims, wherein the article is a laser or an amplifier.

## Patentansprüche

1. Optische Faser, die eine Längsrichtung definiert, wobei die optische Faser einen Kern mit einem Durchmesser aufweist, der größer ist als 10 µm, wobei der Kern mindestens zwei feste Segmente unterschiedlicher Zusammensetzung aufweist, **dadurch gekennzeichnet, dass** mindestens eines der Segmente ein lichtempfindliches Material aufweist und eine zweites Kernsegment mindestens ein aktives Material, wie beispielsweise mit seltenen Erden dotiertes Siliziumdioxid, aufweist, wobei der mindestens eine feste Kernabschnitt, der ein lichtempfindliches Material aufweist, in der Mitte des Kerns angeordnet ist.

2. Optische Faser nach Anspruch 1, wobei die optische Faser einen Kern mit einem effektiven Brechungsindex n_{Kern}. und einen den Kern umgebenden Mantel aufweist, wobei
• der Kern in einem Querschnitt senkrecht zu der Längsrichtung segmentiert ist, wobei der Kern ein erstes Kernsegment mit einer Fläche a₁ und ein zweites Kernsegment mit einer Fläche a₂ aufweist;
• das erste Kernsegment mindestens ein lichtempfindliches Material, wie beispielsweise Ge und / oder B und / oder P dotiertes Siliziumdioxid aufweist;
• das zweite Kernsegment das erste Kernsegment umgibt.

3. Optische Faser nach Anspruch 2, wobei a₁ kleiner ist als a₂, wie beispielsweise mindestens um das 1,5-fache kleiner ist als a₂, wie beispielsweise mindestens um das 2,0-fache kleiner ist als a₂, wie beispielsweise mindestens um das 3,0-fache kleiner ist als a₂, wie beispielsweise mindestens um das 6,0-fache kleiner ist als a₂, wie beispielsweise mindestens um das 12,0-fache kleiner ist als a₂, wie beispielsweise mindestens um das 18,0-fache kleiner ist als a₂.

4. Optische Faser nach Anspruch 2 oder 3, wobei a₂ größer ist als 100 µm², wie beispielsweise größer als 150 µm², wie beispielsweise größer als 200 µm², wie beispielsweise größer als 300 µm², wie beispielsweise größer als 500 µm², wie beispielsweise größer als 1000 µm², wie beispielsweise größer als 1500 µm², wie beispielsweise größer als 2000 µm², wie beispielsweise größer als 3000 µm², wie beispielsweise größer als 5000 µm², oder sogar größer ist als 10000 µm².

5. Optische Faser nach einem der vorhergehenden Ansprüche, wobei eine lokale Konzentration des lichtempfindlichen Materials in dem ersten Segment größer ist als 3 Mol%, wie beispielsweise größer als 5 Mol%, wie beispielsweise größer als 10 Mol%, oder sogar größer ist als 15 Mol%.

6. Optische Faser nach einem der vorhergehenden Ansprüche, wobei eine lokale Konzentration des aktiven Dotierstoffs in dem/den zweiten Segment(en) größer ist als 0,01 Mol%, wie beispielsweise größer als 0,1 Mol%, wie beispielsweise größer als 0,5 Mol%, wie beispielsweise größer als 1,0 Mol%, oder sogar größer ist als 5 Mol%.

7. Optische Faser nach einem der vorhergehenden Ansprüche, wobei der Kern eine größte Querschnittsabmessung von mindestens 15 µm, wie beispielsweise mindestens 20 µm, wie beispielsweise mindestens 25 µm, wie beispielsweise mindestens 30 µm; wie beispielsweise mindestens 40 µm, wie beispielsweise mindestens 60 µm, wie beispielsweise mindestens 80 µm, wie beispielsweise mindestens 100 µm, wie beispielsweise mindestens 120 µm, wie beispielsweise mindestens 150 µm, wie beispielsweise mindestens 200 µm, wie beispielsweise mindestens 300 µm, wie beispielsweise mindestens 500 µm, wie beispielsweise mindestens 800 µm, oder sogar mindestens 1000 µm hat.

8. Optische Faser nach einem der vorhergehenden Ansprüche, wobei der Kern ein Multimode-Kern ist, der ein in das erste Kernsegment eingeschriebenes Faser-Bragg-Gitter aufweist, wobei die optische Faser vorzugsweise in der Lage ist, in einer Grundmode zu arbeiten, wenn sie in einer Faserlaserkonfiguration verwendet wird.

9. Optische Faser nach einem der vorhergehenden Ansprüche, wobei die optische Faser sowohl in ihrer Längsrichtung als auch in einem Querschnitt segmentiert ist.

10. Optische Faser nach einem der vorhergehenden Ansprüche und eine Querschnittssegmentierung aufweisend, wobei das zweite Segment das erste Segment umgibt, wobei vorzugsweise das erste Segment im Wesentlichen mittig in dem Kern angeordnet ist und einen ersten Durchmesser hat, wobei das zweite Segment vorzugsweise benachbart zum ersten Segment angeordnet ist und dieses umgibt, und eine Dicke senkrecht zu seiner Längsrichtung hat, die zwischen dem 0,1 und 10-fachen, wie beispielsweise zwischen dem 0,5 und 3-fachen, wie beispielsweise das Einfache des Durchmessers des ersten Segments ist.

11. Optische Faser nach einem der vorhergehenden Ansprüche, wobei die Faser eine Doppelmantel-(DM)-Faser ist.

12. Optische Faser nach einem der vorhergehenden Ansprüche, wobei die Faser einen sich verjüngenden Abschnitt aufweist.

13. Gegenstand, der eine Faser nach einem der vorhergehenden Ansprüche aufweist, wobei der Gegenstand ein Laser oder ein Verstärker ist.

## Revendications

1. Fibre optique définissant une direction longitudinale, la fibre optique comprenant un coeur ayant un diamètre supérieur à 10 µm, ledit coeur comprenant au moins deux segments solides de composition différente, **caractérisée en ce qu'**au moins l'un des segments comprend un matériau photosensible et un second segment de coeur comprend au moins un matériau actif, par exemple la silice dopée par une terre rare, dans laquelle ladite au moins une section de coeur solide comprenant un matériau photosensible est placée dans le centre dudit coeur.

2. Fibre optique selon la revendication 1, la fibre optique comprenant un coeur ayant un indice de réfraction efficace n_{coeur}, et un gainage entourant ledit coeur, dans laquelle
• dans une coupe transversale perpendiculaire à ladite direction longitudinale, ledit coeur étant segmenté, ledit coeur comprenant un premier segment de coeur ayant une surface a₁ et un second segment de coeur ayant une surface a₂ ;
• ledit premier segment de coeur comprend au moins un matériau photosensible, par exemple une silice dopée au Ge et/ou B et/ou P ;
• ledit second segment de coeur entoure ledit premier segment de coeur.

3. Fibre optique selon la revendication 2, dans laquelle a₁ est inférieure à a₂, par exemple au moins 1,5 fois inférieure à a₂, par exemple au moins 2,0 fois inférieure à a₂, par exemple au moins 3,0 fois inférieure à a₂, par exemple au moins 6,0 fois inférieure à a₂, par exemple au moins 12,0 fois inférieure à a₂, par exemple au moins 18,0 fois inférieure à a₂.

4. Fibre optique selon la revendication 2 ou 3, dans laquelle a₂ est supérieure à 100 µm², par exemple supérieure à 150 µm², par exemple supérieure à 200 µm², par exemple supérieure à 300 µm², par exemple supérieure à 500 µm², par exemple supérieure à 1 000 µm², par exemple supérieure à 1 500 µm², par exemple supérieure à 2 000 µm², par exemple supérieure à 3 000 µm², par exemple supérieure à 5 000 µm², ou même supérieure à 10 000 µm².

5. Fibre optique selon l'une quelconque des revendications précédentes, dans laquelle la concentration locale de matériau photosensible dans le premier segment est supérieure à 3 % en moles, par exemple supérieure à 5 % en moles, par exemple supérieure à 10 % en moles, ou même supérieure à 15 % en moles.

6. Fibre optique selon l'une quelconque des revendications précédentes, dans laquelle une concentration locale de dopant actif dans le(s) second(s) segment(s) est supérieure à 0,01 % en moles, par exemple supérieure à 0,1 % en moles, par exemple supérieure à 0,5 % en moles, par exemple supérieure à 1,0 % en moles, ou même supérieure à 5 % en moles.

7. Fibre optique selon l'une quelconque des revendications précédentes, dans laquelle ledit coeur a une dimension en coupe transversale maximale d'au moins 15 µm, par exemple d'au moins 20 µm, par exemple d'au moins 25 µm, par exemple d'au moins 30 µm, par exemple d'au moins 40 µm, par exemple d'au moins 60 µm, par exemple d'au moins 80 µm, par exemple d'au moins 100 µm, par exemple d'au moins 120 µm, par exemple d'au moins 150 µm, par exemple d'au moins 200 µm, par exemple d'au moins 300 µm, par exemple d'au moins 500 µm, par exemple d'au moins 800 µm ou même d'au moins 1 000 µm.

8. Fibre optique selon l'une quelconque des revendications précédentes, dans laquelle ledit coeur est un coeur multimode comprenant un réseau de Bragg à fibre inscrit dans ledit premier segment de coeur, ladite fibre optique étant de préférence capable de fonctionner dans un mode fondamental lorsqu'elle est utilisée dans une configuration de laser à fibre.

9. Fibre optique selon l'une quelconque des revendications précédentes, dans laquelle ladite fibre optique est segmentée à la fois dans sa direction longitudinale et dans une coupe transversale.

10. Fibre optique selon l'une quelconque des revendications précédentes et comprenant une segmentation en coupe transversale, dans laquelle ledit second segment entoure le premier segment, de préférence le premier segment est placé essentiellement de manière centrale dans le coeur et a un premier diamètre, le second segment est de préférence placé à une position adjacente au dit premier segment et entoure celui-ci, et a une épaisseur perpendiculaire à sa direction longitudinale qui est entre 0,1 et 10 fois, par exemple entre 0,5 et 3 fois, par exemple 1 fois, le diamètre du premier segment.

11. Fibre optique selon l'une quelconque des revendications précédentes, dans laquelle ladite fibre est une fibre double gaine.

12. Fibre optique selon l'une quelconque des revendications précédentes, dans laquelle ladite fibre comprend une section conique.

13. Article comprenant la fibre selon l'une quelconque des revendications précédentes, dans laquelle l'article est un laser ou un amplificateur.
